# EUROPÄISCHE PATENTSCHRIFT

(11) **EP 3 634 781 B1**
(45) Veröffentlichungstag und Bekanntmachung des Hinweises auf die Patenterteilung: **10.11.2021**
(21) Anmeldenummer: 18714454.8
(22) Anmeldetag: 15.03.2018
(51) Int. Cl.: B60C 23/04, B29D 30/00

(54) **REIFEN MIT EINEM SENSOR UND PIEZO-ELEMENT**
TYRE WITH A SENSOR AND PIEZOELEMENT
PNEUMATIQUE ÉQUIPÉ D'UN CAPTEUR ET D'UN ÉLÉMENT PIÉZOÉLECTRIQUE

(30) Priorität: 07.06.2017 DE 102017209534
(43) Veröffentlichungstag der Anmeldung: 15.04.2020
(73) Patentinhaber: Continental Reifen Deutschland GmbH, 30165 Hannover (DE)
(72) Erfinder: KURZ, Martin, 30161 Hannover (DE); BERGER, Christoph, 30173 Hannover (DE); BUSCHE, Joachim, 31157 Sarstedt (DE)
(74) Vertreter: Continental Corporation
(86) Internationale Anmeldenummer: PCT/EP2018/056510
(87) Internationale Veröffentlichungsnummer: WO 2018/224192

(56) Entgegenhaltungen:
- GB-A- 2 307 044
- US-A- 4 504 761
- US-A1- 2005 110 277
- US-A1- 2011 043 161

## Beschreibung

Die vorliegende Erfindung bezieht sich auf einen Reifen.

Die Erfindung geht aus von einem Reifen, wobei der Reifen eine Cordeinlage, eine Stahlcordgürtellage und einen Laufstreifen aufweist. Der Reifen ist um eine Rotationsachse in eine Umlaufrichtung rotierbar. Der Reifen weist einen Reifenzenit auf. Der Reifen weist ferner mindestens eine elektromagnetische Sende-und-Empfangsvorrichtung auf. Die mindestens eine elektromagnetische Sende-und-Empfangsvorrichtung weist mindestens ein Sensorelement auf.

Bei der Cordeinlage kann es sich beispielsweise um eine Textilcordeinlage oder um eine Stahlcordeinlage handeln.

Insbesondere weist der Reifen eine Spulbandage auf.

Bei einem Reifenzenit handelt es sich um eine kreisförmig entlang einer Reifenaußenfläche verlaufende Linie. Eine Reifenaußenfläche ist eine von dem Reifen weg orientierte Oberfläche des Reifens. Der Reifenzenit verläuft entlang der Mitte des Laufstreifens. Der Reifenzenit verläuft parallel zu der Umlaufrichtung des Reifens. Der Laufstreifen ist der Oberflächenbereich des Reifens, auf dem der Reifen während eines regulären Betriebs rollt.

Ein Sensorelement ist ein Element, das mindestens einen Sensor zur Messung einer physikalischen oder chemischen Größe aufweist.

Bei dem erfindungsgemäßen Reifen kann es sich um einen Pkw-Reifen, um einen Lkw-Reifen, um einen Motorrad-Reifen, um einen Industrie-Reifen, um einen Reifen, der in einem landwirtschaftlichen Bereich, einem militärischen Bereich, im Bergbau oder im Zivil- und Katastrophenschutz angewendet wird, oder um einen Fahrrad-Reifen handeln.

Insbesondere weist der Reifen einen Wulst, einen Wulstverstärker, ein Kernprofil, einen Seitenstreifen und eine Innenschicht auf.

Aus dem Stand der Technik sind Reifen bekannt, wobei die Reifen Sensorelemente aufweisen. Mittels der Sensorelemente können Informationen über einen physikalischen Zustand des Reifens gewonnen werden. Bei dem physikalischen Zustand kann es sich beispielsweise um einen Druck handeln, der in einem Inneren des Reifens herrscht.

So wird beispielsweise in der DE 10 2015 226 705 A1 ein Reifen offenbart, wobei der Reifen einen Sensor aufweist, mit dem beispielsweise eine Information über einen Druck im Inneren des Reifens ermittelt werden kann. Ferner wird in der US 2005110277A1 der Einsatz piezoelektrischer Technologie in einem Reifen offenbart. Weiter wird in der GB2307044A eine Vorrichtung zur Überwachung eines Zustands eines Reifens offenbart.

Für den Betrieb der aus dem Stand der Technik bekannten Sensorelemente der Reifen könnte es stets notwendig sein, eine Energieversorgung für die Sensorelemente bereitzustellen. Diese Energieversorgung könnte über eine elektrische Leitung von einer außerhalb des Reifens angeordneten elektrischen Energiequelle aus erfolgen oder über eine elektromagnetische Batterie sichergestellt sein. Sowohl die Versorgung des Sensorelements über eine elektrische Leitung als auch die Versorgung des Sensorelements über eine Batterie könnte zu einer physischen Beeinflussung des Reifens und somit zu einer Beeinträchtigung der Fahreigenschaften des Reifens führen. Ursächlich für diese Beeinträchtigung könnten konstruktive und mechanische Maßnahmen an dem Reifen sein, die vorgenommen werden müssten, um beispielsweise die elektrische Leitung innerhalb des Reifens zu verlegen oder beispielsweise eine Batterie des in den Reifen integrierten Sensorelements zu ersetzen. Diese konstruktiven und mechanischen Maßnahmen könnten zu einer Beeinträchtigung der Fahreigenschaften des Reifens führen.

Der Erfindung liegt daher die Aufgabe zugrunde, einen Luftreifen bereitzustellen, bei dem die Energieversorgung des Sensorelements auf einfache und aufwandsarme Art realisiert ist und bei dem zugleich die Energieversorgung des Sensorelements zu keinen Beeinträchtigungen der Fahreigenschaften des Reifens führt.

Gelöst wird die gestellte Aufgabe erfindungsgemäß dadurch, dass die mindestens eine Sende-und-Empfangsvorrichtung ein Piezo-Element aufweist. Dabei ist die mindestens eine elektromagnetische Sende-und-Empfangsvorrichtung räumlich zwischen einem Bereich der Cordeinlage und einem ersten Bereich des Laufstreifens angeordnet. Dabei ist die mindestens eine elektromagnetische Sende-und-Empfangsvorrichtung vorzugsweise derart räumlich zwischen einem Bereich der Cordeinlage und einem ersten Bereich des Laufstreifens angeordnet, dass eine Verformung des ersten Bereichs des Laufstreifens oder des Bereichs der Cordeinlage zu einer derartigen Verformung des Piezo-Elementes führt, dass mittels des Pieze-Elementes, aufgrund seiner Verformung, eine elektrische Spannung erzeugt wird.

Ferner ist die mindestens eine elektromagnetische Sende-und-Empfangsvorrichtung beispielsweise räumlich zwischen einem Bereich der Cordeinlage und einem Stahlcordgürtel oder zwischen zwei Lagen des Stahlcordgürtels angeordnet. Ferner ist die mindestens eine elektromagnetische Sende-und-Empfangsvorrichtung beispielsweise räumlich zwischen einem Bereich der Cordeinlage und auf der Spulbandage oder zwischen zwei Lagen der Spulbandage angeordnet.

Durch den erfindungsgemäßen Umstand, wonach die mindestens eine elektromagnetische Sende-und-Empfangsvorrichtung ein Piezo-Element aufweist, wobei die mindestens eine elektromagnetische Sende-und-Empfangsvorrichtung räumlich zwischen einem Bereich der Cordeinlage und einem ersten Bereich des Laufstreifens angeordnet ist, wird ein Reifen mit einem Sensorelement bereitgestellt, bei dem das Sensorelement in einem derartigen Bereich des Reifens angeordnet ist, der bei einem Abrollen des Reifens mechanisch verformt wird. Die mechanische Verformung dieses Bereiches führt schließlich zu einer Verformung des Piezo-Elementes. Die Verformung des Piezo-Elementes führt zu einer Erzeugung einer elektrischen Spannung durch das Piezo-Element. Mittels dieser elektrischen Spannung können die mindestens eine elektromagnetische Sende-und-Empfangsvorrichtung und insbesondere das mindestens eine Sensorelement betrieben werden.

Dadurch wird eine Energieversorgung verwirklicht, die aufwandsarm zu realisieren ist und mittels der auf wiederholbare Weise eine Spannung zum Betrieb der elektromagnetischen Sende-und-Empfangsvorrichtung und insbesondere des mindestens einen Sensorelements bereitgestellt wird. Ferner wird eine Energieversorgung sichergestellt, bei der nur keine oder allenfalls im Vergleich zum Stand der Technik geringfügige konstruktive Maßnahmen an dem Reifen erforderlich sind. Hintergrund der nicht oder nur in geringem Umfang erforderlichen konstruktiven Maßnahmen ist der Umstand, dass durch das Piezo-Element selbst wiederholt Energie zum Betrieb der elektromagnetischen Sende-und-Empfangsvorrichtung und insbesondere des mindestens einen Sensorelements bereitgestellt wird.

Somit wird insgesamt ein verbesserter Reifen mit einer vereinfachten Bereitstellung und Erzeugung von Energie zu einem Betrieb der mindestens einen elektromagnetischen Sende-und-Empfangsvorrichtung bereitgestellt.

Weitere vorteilhafte Ausgestaltungsformen der vorliegenden Erfindung sind Gegenstand der Unteransprüche.

Gemäß einer vorzugsweisen Ausgestaltungsform der Erfindung ist die mindestens eine elektromagnetische Sende-und-Empfangsvorrichtung räumlich zwischen einem Bereich der Spulbandage und dem ersten Bereich des Laufstreifens angeordnet.

Durch den erfindungsgemäßen Umstand, wonach die mindestens eine elektromagnetische Sende- und Empfangsvorrichtung räumlich zwischen einem Bereich der Spulbandage und dem ersten Bereich des Laufstreifens angeordnet ist, ist das Piezo-Element näher an einem solchen Bereich des Laufstreifens angeordnet in dem es zu stärkeren Verformungen dieses Bereichs kommt, als es bei einem radial weiter innen liegenden, also näher zu einer Rotationsachse liegenden Bereich des Reifens der Fall wäre. Dieser Umstand führt dazu, dass das Piezo-Element einer höheren Verformungswahrscheinlichkeit unterliegt und somit eine größere Wahrscheinlichkeit der Energieerzeugung aufweist, als ein radial weiter innen angeordnetes Piezo-Element.

Gemäß einer vorzugsweisen Ausgestaltungsform der Erfindung, ist die mindestens eine elektromagnetische Sende-und-Empfangsvorrichtung in radialer Richtung zwischen einem Reifenzenitbereich und der Rotationsachse des Reifens angeordnet. Dabei handelt es sich bei dem Reifenzenitbereich um einen in radialer Richtung äußersten Oberflächenbereich des Reifens. Der Reifenzenitbereich weist eine Breite von mindestens 0,06 m auf. Dabei handelt es sich bei dieser Breite um eine Erstreckung des Reifenzenitbereichs parallel zu der Rotationsachse und rechtwinklig zu der Umlaufrichtung. Der Reifenzenitbereich ist Bestandteil des Laufstreifens.

Der Reifen folgt grundsätzlich einer Kreisform, wobei die Kreisform konzentrisch zu der Rotationsachse des Reifens ausgebildet ist. Ein Normalvektor einer Ebene, in der der Kreis der Kreisform liegt, ist parallel zu der Rotationsachse ausgerichtet. In radialer Richtung bedeutet von der Rotationsachse ausgehend zu der Innenschicht des Reifens und weiter zu dem Laufstreifen des Reifens hin weisend. Die radiale Richtung liegt parallel zu einem Radius der Kreisform und stets rechtwinklig zu der Rotationsachse sowie zu der Umlaufrichtung

Gemäß einer nächsten vorzugsweisen Ausgestaltungsform der Erfindung ist die mindestens eine elektromagnetische Sende-und-Empfangsvorrichtung in einem zweiten Bereich des Laufstreifens angeordnet. Der zweite Bereich des Laufstreifens liegt radial weiter innen als der erste Bereich des Laufstreifens. Bei dem ersten Bereich des Laufstreifens kann es sich um den radial äußersten Bereich des Laufstreifens handeln.

Gemäß einer nächsten vorzugsweisen Ausgestaltungsform der Erfindung weist die mindestens eine elektromagnetische Sende-und-Empfangsvorrichtung mindestens ein Energiespeicherelement auf. Das Energiespeicherelement ist zur Speicherung der mittels des Piezo-Elementes erzeugten elektrischen Energie geeignet. Bei dem mindestens einen Energiespeicherelement handelt es sich insbesondere um einen Kondensator. Beispielhafte Kapazitäten des Kondensators liegen in einem Bereich von 10nF bis 100µF.

Durch den erfindungsgemäßen Umstand, wonach die mindestens eine elektromagnetische Sende- und Empfangsvorrichtung mindestens ein Energiespeicherelement aufweist, wobei es sich bei dem mindestens einen Energiespeicherelement insbesondere um einen Kondensator handelt, wird eine Speicherung der mittels des Piezo-Elementes gewonnenen Energie ermöglicht. Die Speicherung dieser Energie ermöglicht unter anderem einen bedarfsabhängigen Gebrauch der Energie.
Es kann ein Signal mittels der mindestens einen elektromagnetischen Sende-und-Empfangsvorrichtung beispielsweise genau dann ausgesandt werden, wenn mittels des mindestens einen Piezo-Elementes die erforderliche Menge an elektrischer Energie gewonnen und in dem Energiespeicherelement gespeichert worden ist. Die erforderliche Menge an Energie kann beispielsweise nach einer mehrmaligen Verformung des Piezo-Elementes gewonnen worden sein.

Gemäß einer nächsten vorzugsweisen Ausgestaltungsform der Erfindung weist die mindestens eine elektromagnetische Sende-und-Empfangsvorrichtung mindestens ein Temperatursensorelement als Sensorelement auf und/oder die elektromagnetische Sende-und-Empfangsvorrichtung weist mindestens ein Profiltiefensensorelement als Sensorelement auf.
Bei dem mindestens einen Temperatursensorelement handelt es sich beispielsweise um einen Heißleiter oder NTC-Thermistor oder einen Kaltleiter oder PTC-Thermistor. Ein Thermistor ist ein elektrischer Widerstand, dessen Widerstandswert mit einer Temperatur reproduzierbar ist.

Bei dem mindestens einen Profiltiefensensorelement handelt es sich vorzugsweise um ein resistives Profiltiefensensorelement, ein kapazitives Profiltiefensensorelement oder um ein induktives Profiltiefensensorelement. Darüber hinaus kann es sich um ein Profiltiefensensorelement handeln, mittels dem in Abhängigkeit einer Änderung einer Masse und/oder einer Fläche eines Profilblockes eine Profiltiefe bestimmt werden kann.

Gemäß einer nächsten vorzugsweisen Ausgestaltungsform der Erfindung weist der Reifen mindestens eine elektromagnetische Vermittlungsvorrichtung auf. Dabei ist die mindestens eine elektromagnetische Vermittlungsvorrichtung zum Empfang mindestens eines ersten Signales seitens der mindestens einen elektromagnetischen Sende-und-Empfangsvorrichtung geeignet. Die mindestens eine elektromagnetische Vermittlungsvorrichtung ist zu einem Aussenden mindestens eines zweiten Signales und/oder einem Weiterleiten des ersten Signales an mindestens eine Empfängervorrichtung geeignet. Inhalt sowohl des mindestens einen ersten Signales als auch des mindestens einen zweiten Signales sind beispielsweise die mittels des mindestens einen Sensorelementes gewonnenen Informationen oder eine Information über die mindestens eine elektromagnetische Sende-und-Empfangsvorrichtung selbst. Die Vermittlungsvorrichtung weist insbesondere eine Batterie, eine Sendevorrichtung und/oder eine Empfangsvorrichtung auf. Die Vermittlungsvorrichtung ist insbesondere austauschbar auf einer Reifeninnenschicht angeordnet.

Die Empfängervorrichtung kann innerhalb eines Rades, auf dem der Reifen, insbesondere der erfindungsgemäße Reifen, angeordnet ist, angeordnet sein. Die Empfängervorrichtung kann ferner innerhalb eines Fahrzeugs angeordnet sein, wobei es sich bei dem Fahrzeug um das Fahrzeug handelt, an dem der Reifen genutzt wird.

Vorzugsweise ist die mindestens eine elektromagnetische Vermittlungsvorrichtung gemäß einer Ausführungsform der Erfindung an einer Innenschicht des Reifens angeordnet.

Gemäß einer nächsten vorzugsweisen Ausgestaltungsform der Erfindung ist die mindestens eine elektromagnetische Sende-und-Empfangsvorrichtung zumindest teilweise mit einem Elastomer beschichtet. Dabei handelt es sich bei dem Elastomer insbesondere um einen Gummi und/oder um einen Naturkautschuk und/oder um einen Synthesekautschuk. Zusätzlich und/oder alternativ ist die mindestens eine elektromagnetische Sende-und-Empfangsvorrichtung zumindest teilweise mit einem Haftvermittler beschichtet. Bei dem Haftvermittler handelt es sich insbesondere um ein Primer/Cover-System und/oder um einen epoxybasierten Haftvermittler.

Durch den erfindungsgemäßen Umstand, wonach die mindestens eine elektromagnetische Sende-und-Empfangsvorrichtung zumindest teilweise mit einem Elastomer beschichtet ist, wobei es sich bei dem Elastomer insbesondere um einen Gummi oder um einen Naturkautschuk und/oder um einen Synthesekautschuk, und/oder zumindest teilweise mit einem Haftvermittler beschichtet ist, wobei es sich bei dem Haftvermittler insbesondere um ein Primer/Cover-System und/oder um einen epoxybasierten Haftvermittler handelt, wird eine mechanisch stabile Verbindung der mindestens einen elektromagnetischen Sende- und Empfangsvorrichtung mit beispielsweise der Spulbandage und/oder einer anderen Komponente des Reifens gewährleistet.
Bei der anderen Komponente handelt es sich insbesondere um den Laufstreifen oder eine Baseschicht des Luftreifens. Bei der Baseschicht handelt es sich beispielsweise um eine Schicht unmittelbar unterhalb des Laufstreifens des Reifens, wobei diese Schicht ausgehend von dem Laufstreifen in Richtung der Rotationsachse orientiert ist und somit räumlich zwischen der Rotationsachse und dem Laufstreifen liegt.

Durch die Beschichtung der mindestens einen elektromagnetischen Sende-und-Empfangsvorrichtung mit einem Elastomer und/oder mit einem Haftvermittler wird mindestens eine Anbindungsschicht an der mindestens einen elektromagnetischen Sende-und-Empfangsvorrichtung ausgebildet. Die Anbindungsschicht ist ausgehend von der mindestens einen elektromagnetischen Sende-und-Empfangsvorrichtung in radialer Richtung insbesondere zwischen der mindestens einen elektromagnetischen Sende-und-Empfangsvorrichtung und der Spulbandage angeordnet.

Gemäß einer nächsten vorzugsweisen Ausgestaltungsform der Erfindung ist die mindestens eine elektromagnetische Sende- und Empfangsvorrichtung zumindest teilweise mit einer Schutzschicht beschichtet. Die Schutzschicht enthält eine Kunststofffolie und/oder eine Metallfolie.

Durch den erfindungsgemäßen Umstand, wonach die mindestens eine elektromagnetische Sende-und-Empfangsvorrichtung zumindest teilweise mit einer Schutzschicht beschichtet ist, wobei die Schutzschicht eine Kunststofffolie und/oder eine Metallfolie enthält, wird die elektromagnetische Sende-und-Empfangsvorrichtung in noch höherem Maße vor mechanischen oder thermischen Einwirkungen geschützt, als es gemäß dem Stand der Technik der Fall ist.

Gemäß einer nächsten vorzugsweisen Ausgestaltungsform der Erfindung handelt es sich bei dem Reifen um einen Reifenrohling oder um einen vulkanisierten Luftreifen.

Weitere Merkmale, Vorteile und Einzelheiten, auf die die Erfindung in ihrem Umfang aber nicht beschränkt ist, werden nun anhand der Zeichnungen näher beschrieben.

Es zeigt:
- Fig. 1: eine schematische Darstellung eines erfindungsgemäßen Reifens gemäß einer Ausführungsform;
- Fig. 2: eine schematische Darstellung eines erfindungsgemäßen Reifens gemäß einer weiteren Ausführungsform;
- Fig. 3: eine schematische Darstellung eines erfindungsgemäßen Reifens gemäß einer weiteren Ausführungsform;
- Fig. 4: eine schematische Darstellung eines erfindungsgemäßen Reifens gemäß einer weiteren Ausführungsform;
- Fig. 5: eine schematische Darstellung einer erfindungsgemäßen elektromagnetischen Sende-und-Empfangsvorrichtung zur Anwendung in einem erfindungsgemäßen Reifen gemäß einer Ausführungsform;
- Fig. 6: eine schematische Darstellung einer erfindungsgemäßen elektromagnetischen Sende-und-Empfangsvorrichtung zur Anwendung in einem erfindungsgemäßen Reifen gemäß einer weiteren Ausführungsform.

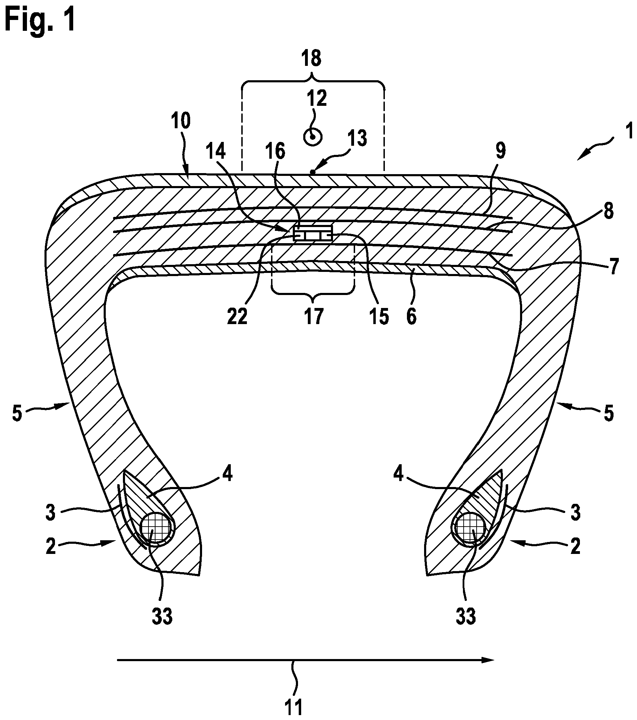

In der Figur 1 ist ein erfindungsgemäßer Reifen 1 in Radialschnittansicht schematisch dargestellt. Der Reifen 1 weist einen Wulst 2, einen Wulstverstärker 3, ein Kernprofil 4, einen Wulstkern 33, einen Seitenstreifen 5, eine Innenschicht 6, eine Textilcordeinlage 7, eine Stahlcordgürtellage 8, eine Spulbandage 9 und einen Laufstreifen 10 auf. Der Reifen 1 ist um eine Rotationsachse 11 in eine Umlaufrichtung 12 rotierbar.
Neben oder alternativ zu der Textilcordeinlage 7 kann gleichermaßen auch eine Stahlcordeinlage verwendet werden und in dem Reifen 1 angeordnet sein.
Der Reifen 1 weist einen Reifenzenit 13 auf. Ferner weist der Reifen 1 mindestens eine elektromagnetische Sende-und-Empfangsvorrichtung 14 auf.
Die mindestens eine Sende-und-Empfangsvorrichtung 14 weist mindestens ein Sensorelement 15 auf. Die mindestens eine elektromagnetische Sende-und-Empfangsvorrichtung 14 ist räumlich zwischen einem Bereich 17 der Textilcordeinlage 7 und einem ersten Bereich 18 des Laufstreifens 10 angeordnet.
Die mindestens eine elektromagnetische Sende-und-Empfangsvorrichtung 14 weist ferner mindestens ein Piezo-Element 16 auf.

Das mindestens eine Piezo-Element 16 ist derart angeordnet, dass es durch ein Abrollen des Reifens 1 in die Umlaufrichtung 12 zu einer Verformung des Laufstreifens 10 und somit zu einer Verformung des Piezo-Elementes 16 selbst kommt. Durch die Verformung des Piezo-Elementes 16 wird eine elektrische Spannung erzeugt. Diese elektrische Spannung kann zum Betrieb des mindestens einen Sensorelementes 15 und der mindestens einen elektronmagnetischen Sende-und-Empfangsvorrichtung 14 selbst verwendet werden.

Vorzugsweise weist die mindestens eine elektromagnetische Sende-und-Empfangsvorrichtung 14 mindestens ein Energiespeicherelement 22 auf. Bei dem mindestens einen Energiespeicherelement 22 handelt es sich vorzugsweise um einen Kondensator.

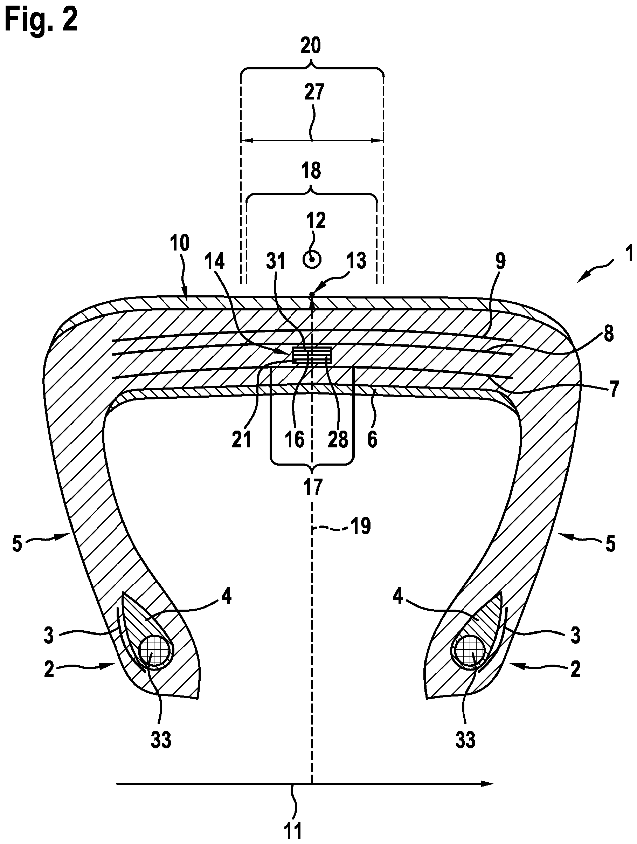

In der Figur 2 ist der erfindungsgemäße Luftreifen 1 gemäß einer weiteren Ausführungsform schematisch dargestellt. Gemäß der Darstellung in der Figur 2 ist die mindestens eine elektromagnetische Sende-und-Empfangsvorrichtung 14 in radialer Richtung 19 zwischen einem Reifenzenitbereich 20 und der Rotationsachse 11 des Reifens 1 angeordnet. Die radiale Richtung 19 ist als gestrichelte Linie dargestellt.
Dabei ist der Reifenzenitbereich 20 ein in radialer Richtung 19 äußerster Oberflächenbereich des Reifens 1. Der Oberflächenbereich ist ein Bestandteil des Laufstreifens 10. Der Reifenzenitbereich 20 weist eine Breite 27 von mindestens 0,06 m auf. Bei der Breite 27 handelt es sich um eine Erstreckung des Reifenzenitbereichs 20 parallel zu der Rotationsachse 11 und rechtwinklig zu der Umlaufrichtung 12.

Vorzugsweise ist die mindestens eine elektromagnetische Sende-und-Empfangsvorrichtung 14 derart ausgestaltet, dass auf ihr eine Anbindungsschicht 21 aufgebracht ist. Die Anbindungsschicht 21 ist ausgehend von der mindestens einen elektromagnetischen Sende-und-Empfangsvorrichtung 14 in radialer Richtung 19 zwischen einem ersten Bereich 28 der mindestens einen elektromagnetischen Sende-und-Empfangsvorrichtung 14 und der Textilcordeinlage 7 angeordnet. Die mindestens eine elektromagnetische Sende-und-Empfangsvorrichtung 14 enthält vorzugsweise zumindest teilweise eine Schutzschicht 31.
Die Schutzschicht 31 ist zum Schutz der mindestens einen elektromagnetischen Sende-und-Empfangsvorrichtung 14 vor chemischen und mechanischen Einwirkungen geeignet.

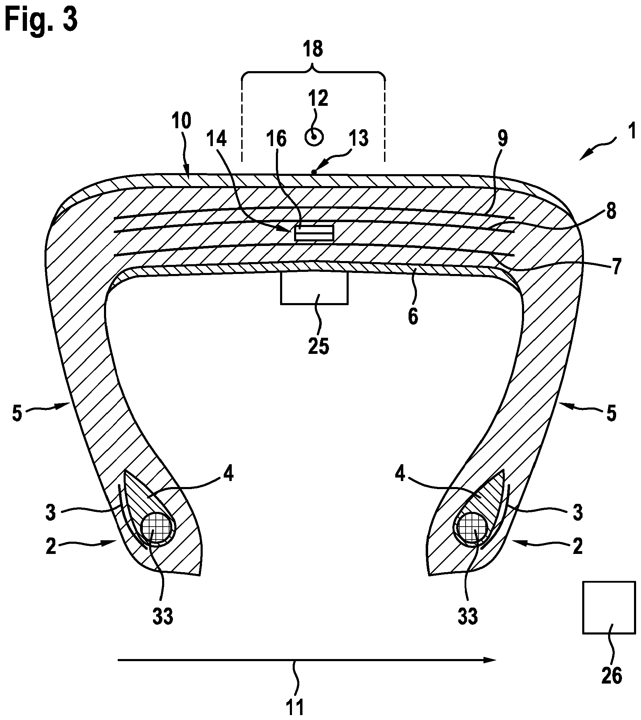

In der Figur 3 ist ein erfindungsgemäßer Reifen gemäß einer weiteren Ausführungsform schematisch dargestellt. In der Figur 3 ist der Reifen 1 im Gegensatz zu der schematischen Darstellung in der Figur 1 derart ausgebildet, dass der Reifen 1 mindestens eine elektromagnetische Vermittlungsvorrichtung 25 aufweist. Die mindestens eine elektromagnetische Vermittlungsvorrichtung 25 ist zu einem Empfang mindestens eines ersten Signales seitens der elektromagnetischen Sende- und Empfangsvorrichtung 14 geeignet und zu einem Aussenden mindestens eines zweiten Signales und/oder einem Weiterleiten des ersten Signales an eine Empfängervorrichtung 26 geeignet. Die Empfängervorrichtung 26 ist außerhalb des Reifens 1 und außerhalb eines nicht dargestellten Rades angeordnet. Die mindestens eine elektromagnetische Vermittlungsvorrichtung 25 ist vorzugsweise an der Innenschicht 6 angeordnet.

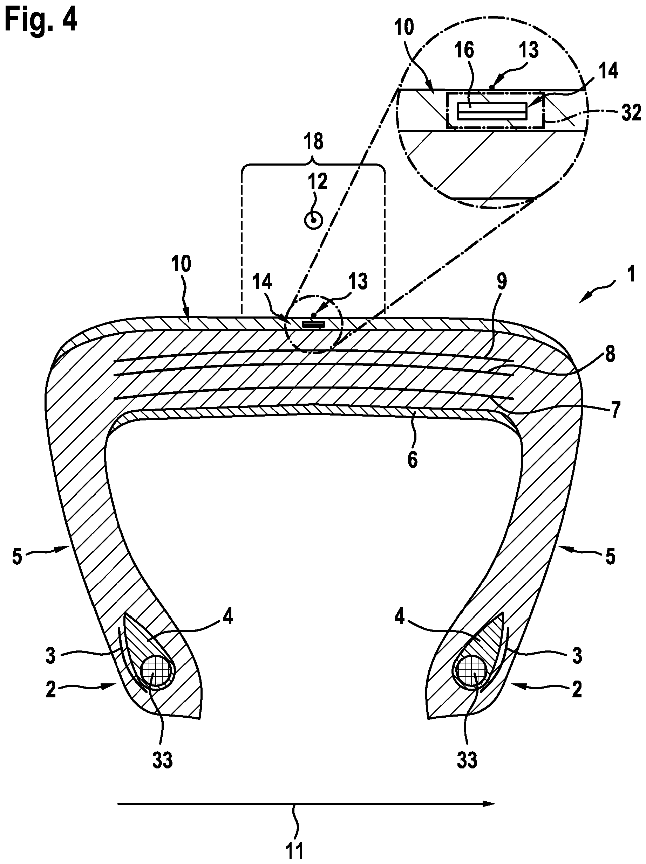

In der Figur 4 ist der erfindungsgemäße Luftreifen 1 gemäß einer weiteren Ausführungsform schematisch dargestellt. Gemäß der Darstellung in der Figur 4 ist die mindestens eine elektromagnetische Sende-und-Empfangsvorrichtung 14 in einem zweiten Bereich 32 des Laufstreifens 10 angeordnet. Der zweite Bereich 32 des Laufstreifens 10 liegt radial weiter innen als der erste Bereich 18 des Laufstreifens 10.

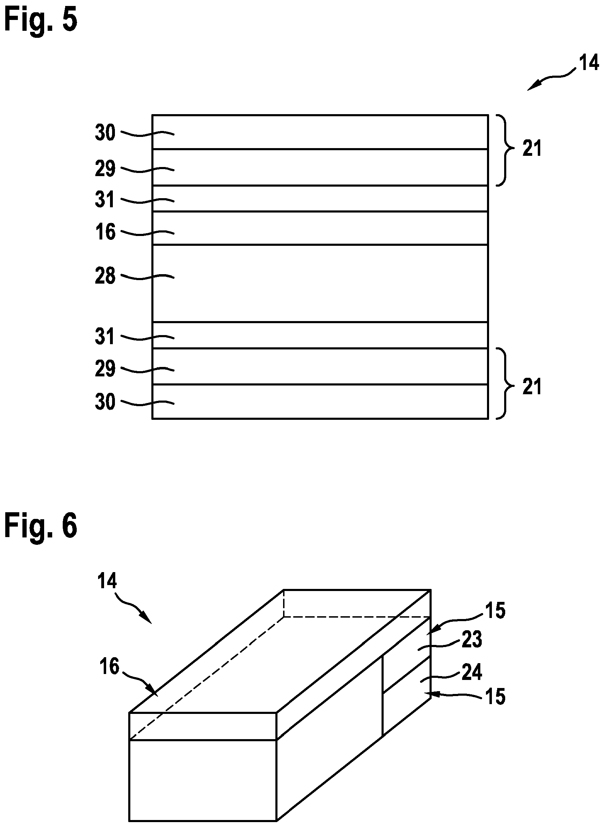

In der Figur 5 ist eine erfindungsgemäße elektromagnetische Sende-und-Empfangsvorrichtung 14 gemäß einer weiteren Ausführungsform zur Anwendung in einem erfindungsgemäßen Reifen 1 schematisch dargestellt. Ein erster Bereich 28 der elektromagnetischen Sende-und-Empfangsvorrichtung 14 ist zumindest teilweise mit einem Elastomer 29 beschichtet und/oder zumindest teilweise mit einem Haftvermittler 30 beschichtet. Das Elastomer 29 und/oder der Haftvermittler 30 können zusammen die Anbindungsschicht 21 ausbilden. Insbesondere ist räumlich zwischen mindestens einer Anbindungsschicht 21 und dem ersten Bereich 28 der elektromagnetischen Sende-und-Empfangsvorrichtung 14 eine Schutzschicht 31 angeordnet.

In der Figur 6 ist eine erfindungsgemäße elektromagnetische Sende-und-Empfangsvorrichtung 14 gemäß einer weiteren Ausführungsform zur Anwendung in einem erfindungsgemäßen Reifen 1 schematisch dargestellt. Gemäß der Darstellung in der Figur 6 weist die mindestens eine elektromagnetische Sende-und-Empfangsvorrichtung 14 mindestens ein Temperatursensorelement 23 als Sensorelement 15 auf und/oder die mindestens eine elektromagnetische Sende-und-Empfangsvorrichtung 14 weist mindestens ein Profiltiefensensorelement 24 als Sensorelement 15 auf. Möglich ist auch, dass das mindestens eine Sensorelement 15 vollständig durch ein Temperatursensorelement oder durch ein Profiltiefensensorelement ausgebildet ist.

### Bezugszeichenliste

### (Teil der Beschreibung)

- 1: Reifen
- 2: Wulst
- 3: Wulstverstärker
- 4: Kernprofil
- 5: Seitenstreifen
- 6: Innenschicht
- 7: Textilcordeinlage
- 8: Stahlcordgürtellage
- 9: Spulbandage
- 10: Laufstreifen
- 11: Rotationsachse
- 12: Umlaufrichtung
- 13: Reifenzenit
- 14: Elektromagnetische Sende-und-Empfangsvorrichtung
- 15: Sensorelement
- 16: Piezo-Element
- 17: Bereich der Textilcordeinlage
- 18: Erster Bereich des Laufstreifens
- 19: Radiale Richtung
- 20: Reifenzenitbereich
- 21: Anbindungsschicht
- 22: Energiespeicherelement
- 23: Temperatursensorelement
- 24: Profiltiefensensorelement
- 25: Elektromagnetische Vermittlungsvorrichtung
- 26: Empfängervorrichtung
- 27: Breite des Reifenzenitbereichs
- 28: Erster Bereich der elektromagnetischen Sende-und-Empfangsvorrichtung
- 29: Elastomer
- 30: Haftvermittler
- 31: Schutzschicht
- 32: Zweiter Bereich des Laufstreifens
- 33: Wulstkern

## Patentansprüche

1. Reifen (1), aufweisend eine Cordeinlage (7), eine Stahlcordgürtellage (8) und einen Laufstreifen (10), wobei der Reifen (1) um eine Rotationsachse (11) in eine Umlaufrichtung (12) rotierbar ist und einen Reifenzenit (13) aufweist, wobei der Reifen (1) mindestens eine elektromagnetische Sende-und-Empfangsvorrichtung (14) aufweist, wobei die mindestens eine elektromagnetische Sende-und-Empfangsvorrichtung (14) mindestens ein Sensorelement (15) aufweist, wobei die mindestens eine elektromagnetische Sende-und-Empfangsvorrichtung (14) ein Piezo-Element (16) aufweist, **dadurch gekennzeichnet, dass** die mindestens eine elektromagnetische Sende-und-Empfangsvorrichtung (14) räumlich zwischen einem Bereich (17) der Cordeinlage (7) und einem ersten Bereich (18) des Laufstreifens (10) angeordnet ist.

2. Reifen (1) nach Anspruch 1, **dadurch gekennzeichnet, dass** die mindestens eine elektromagnetische Sende-und-Empfangsvorrichtung (14) räumlich zwischen einem Bereich einer Spulbandage (9) und dem ersten Bereich (18) des Laufstreifens (10) angeordnet ist

3. Reifen (1) nach Anspruch 1 oder 2, **dadurch gekennzeichnet, dass** die mindestens eine elektromagnetische Sende-und-Empfangsvorrichtung (14) in radialer Richtung (19) zwischen einem Reifenzenitbereich (20) und der Rotationsachse (11) des Reifens (1) angeordnet ist, wobei es sich bei dem Reifenzenitbereich um einen in radialer Richtung (19) von der Rotationsachse (11) ausgehend äußersten Oberflächenbereich des Reifens (1) handelt, mit einer Breite (27) von mindestens 0,06 m, wobei es sich bei der Breite (27) um eine Erstreckung des Reifenzenitbereichs (20) parallel zu der Rotationsachse (11) und rechtwinklig zu der Umlaufrichtung (12) handelt.

4. Reifen (1) nach einem der vorhergehenden Ansprüche, **dadurch gekennzeichnet, dass** die mindestens eine elektromagnetische Sende-und-Empfangsvorrichtung (14) in einem zweiten Bereich (32) des Laufstreifens (10) angeordnet ist.

5. Reifen (1) nach einem der vorhergehenden Ansprüche, **dadurch gekennzeichnet, dass** die mindestens eine elektromagnetische Sende-und-Empfangsvorrichtung (14) mindestens ein Energiespeicherelement (22) aufweist.

6. Reifen (1) nach einem der vorhergehenden Ansprüche, **dadurch gekennzeichnet, dass** die mindestens eine elektromagnetische Sende-und-Empfangsvorrichtung (14) mindestens ein Temperatursensorelement (23) als Sensorelement (15) aufweist, und/oder mindestens ein Profiltiefensensorelement (24) als Sensorelement (15) aufweist.

7. Reifen (1) nach einem der vorhergehenden Ansprüche, aufweisend mindestens eine elektromagnetische Vermittlungsvorrichtung (25), wobei die mindestens eine elektromagnetische Vermittlungsvorrichtung (25) zum Empfang mindestens eines ersten Signales seitens der elektromagnetischen Sende-und-Empfangsvorrichtung (14) geeignet ist und zu einem Aussenden mindestens eines zweiten Signales und einem Weiterleiten des ersten Signales an eine Empfängervorrichtung (26) geeignet ist.

8. Reifen (1) nach dem vorhergehenden Anspruch, **dadurch gekennzeichnet, dass** die mindestens eine elektromagnetische Vermittlungsvorrichtung (25) an einer Innenschicht (6) des Reifens (1) angeordnet ist.

9. Reifen (1) nach einem der vorhergehenden Ansprüche, **dadurch gekennzeichnet, dass** die mindestens eine elektromagnetische Sende-und-Empfangsvorrichtung (14) zumindest teilweise mit einem Elastomer (29) beschichtet ist und/oder zumindest teilweise mit einem Haftvermittler (30) beschichtet ist.

10. Reifen (1) nach Anspruch 2, **dadurch gekennzeichnet, dass** eine Anbindungsschicht an der mindestens einen elektromagnetischen Sende-und-Empfangsvorrichtung aufgebracht ist, wobei die Anbindungsschicht ausgehend von der mindestens einen elektromagnetischen Sende-und-Empfangsvorrichtung in radialer Richtung zwischen der mindestens einen elektromagnetischen Sende-und-Empfangsvorrichtung und der Spulbandage angeordnet ist.

11. Reifen (1) nach einem der vorhergehenden Ansprüche, **dadurch gekennzeichnet, dass** die mindestens eine elektromagnetische Sende-und-Empfangsvorrichtung (14) zumindest teilweise mit einer Schutzschicht (31) beschichtet ist, wobei die Schutzschicht (31) eine Kunststofffolie oder eine Metallfolie enthält.

12. Reifen (1) nach einem der vorhergehenden Ansprüche, **dadurch gekennzeichnet, dass** es sich bei dem Reifen (1) um einen vulkanisierten Luftreifen handelt.

## Claims

1. Tyre (1), having a cord inlay (7), a steel cord belt ply (8) and a tread (10), wherein the tyre (1) is rotatable about an axis of rotation (11) in a direction of revolution (12) and has a tyre zenith (13), wherein the tyre (1) has at least one electromagnetic transmitting and receiving device (14), wherein the at least one electromagnetic transmitting and receiving device (14) has at least one sensor element (15), wherein the at least one electromagnetic transmitting and receiving device (14) has a piezo element (16), **characterized in that** the at least one electromagnetic transmitting and receiving device (14) is arranged spatially between a region (17) of the cord inlay (7) and a first region (18) of the tread (10).

2. Tyre (1) according to Claim 1, **characterized in that** the at least one electromagnetic transmitting and receiving device (14) is arranged spatially between a region of a winding bandage (9) and the first region (18) of the tread (10).

3. Tyre (1) according to Claim 1 or 2, **characterized in that** the at least one electromagnetic transmitting and receiving device (14) is arranged in a radial direction (19) between a tyre zenith region (20) and the axis of rotation (11) of the tyre (1), wherein the tyre zenith region is a surface region of the tyre (1) which is outermost proceeding in a radial direction (19) from the axis of rotation (11) and which has a width (27) of at least 0.06 m, wherein the width (27) is an extent of the tyre zenith region (20) parallel to the axis of rotation (11) and at right angles to the direction of revolution (12).

4. Tyre (1) according to any one of the preceding claims, **characterized in that** the at least one electromagnetic transmitting and receiving device (14) is arranged in a second region (32) of the tread (10).

5. Tyre (1) according to any one of the preceding claims, **characterized in that** the at least one electromagnetic transmitting and receiving device (14) has at least one energy store element (22).

6. Tyre (1) according to any one of the preceding claims, **characterized in that** the at least one electromagnetic transmitting and receiving device (14) has at least one temperature sensor element (23) as sensor element (15) and/or has at least one profile depth sensor element (24) as sensor element (15).

7. Tyre (1) according to any one of the preceding claims, having at least one electromagnetic relaying device (25), wherein the at least one electromagnetic relaying device (25) is suitable for receiving at least one first signal from the electromagnetic transmitting and receiving device (14) and for outputting at least one second signal and transmitting the first signal to a receiver device (26).

8. Tyre (1) according to the preceding claim, **characterized in that** the at least one electromagnetic relaying device (25) is arranged on an inner layer (6) of the tyre (1).

9. Tyre (1) according to any one of the preceding claims, **characterized in that** the at least one electromagnetic transmitting and receiving device (14) is at least partially coated with an elastomer (29) and/or is at least partially coated with an adhesion promoter (30).

10. Tyre (1) according to Claim 2, **characterized in that** an attachment layer is applied to the at least one electromagnetic transmitting and receiving device, wherein, proceeding from the at least one electromagnetic transmitting and receiving device, the attachment layer is arranged in a radial direction between the at least one electromagnetic transmitting and receiving device and the winding bandage.

11. Tyre (1) according to any one of the preceding claims, **characterized in that** the at least one electromagnetic transmitting and receiving device (14) is at least partially coated with a protective layer (31), wherein the protective layer (31) comprises a plastics foil or a metal foil.

12. Tyre (1) according to any one of the preceding claims, **characterized in that** the tyre (1) is a vulcanized pneumatic tyre.

## Revendications

1. Pneumatique (1), comprenant un insert de câble (7), une nappe de ceinture de câble en acier (8) et une bande de roulement (10), le pneumatique (1) pouvant tourner sur un axe de rotation (11) dans un sens de rotation (12) et comportant un zénith de pneumatique (13), le pneumatique (1) comportant au moins un dispositif d'émission et de réception électromagnétique (14), l'au moins un dispositif d'émission et de réception électromagnétique (14) comportant au moins un élément de détection (15), l'au moins un dispositif d'émission et de réception électromagnétique (14) comportant un élément piézo (16), **caractérisé en ce que** l'au moins un dispositif d'émission et de réception électromagnétique (14) est disposé spatialement entre une zone (17) de l' insert de câble (7) et une première zone (18) de la bande de roulement (10).

2. Pneumatique (1) selon la revendication 1, **caractérisé en ce que** l'au moins un dispositif d'émission et de réception électromagnétique (14) est disposé spatialement entre une zone de frettes bobinées (9) et la première zone (18) de la bande de roulement (10).

3. Pneumatique (1) selon la revendication 1 ou 2, **caractérisé en ce que** l'au moins un dispositif d'émission et de réception électromagnétique (14) est disposé dans la direction radiale (19) entre une zone de zénith de pneumatique (20) et l'axe de rotation (11) du pneumatique (1), la zone de zénith de pneumatique étant une zone de surface du pneumatique (1) qui est la plus extérieure dans la direction radiale (19) à partir de l'axe de rotation (11), avec une largeur (27) d'au moins 0,06 m, la largeur (27) étant un prolongement de la zone de zénith de pneumatique (20) parallèlement à l'axe de rotation (11) et perpendiculairement au sens de rotation (12).

4. Pneumatique (1) selon l'une des revendications précédentes, **caractérisé en ce que** l'au moins un dispositif d'émission et de réception électromagnétique (14) est disposé dans une deuxième zone (32) de la bande de roulement (10).

5. Pneumatique (1) selon l'une des revendications précédentes, **caractérisé en ce que** l'au moins un dispositif d'émission et de réception électromagnétique (14) comporte au moins un élément de stockage d'énergie (22).

6. Pneumatique (1) selon l'une des revendications précédentes, **caractérisé en ce que** l'au moins un dispositif d'émission et de réception électromagnétique (14) comporte au moins un élément de détection de température (23) comme élément de détection (15), et/ou au moins un élément de détection de profondeur de sculpture (24) comme élément de détection (15).

7. Pneumatique (1) selon l'une des revendications précédentes, comprenant au moins un dispositif de communication électromagnétique (25), l'au moins un dispositif de communication électromagnétique (25) étant adapté pour recevoir au moins un premier signal du dispositif d'émission et de réception électromagnétique (14) et étant adapté pour émettre au moins un deuxième signal et transmettre le premier signal à un dispositif de réception (26).

8. Pneumatique (1) selon la revendication précédente, **caractérisé en ce que** l'au moins un dispositif de communication électromagnétique (25) est disposé au niveau d'une couche intérieure (6) du pneumatique (1).

9. Pneumatique (1) selon l'une des revendications précédentes, **caractérisé en ce que** l'au moins un dispositif d'émission et de réception électromagnétique (14) est au moins partiellement revêtu d'un élastomère (29) et/ou au moins partiellement revêtu d'un promoteur d'adhérence (30).

10. Pneumatique (1) selon la revendication 2, **caractérisé en ce qu'**une couche de liaison est appliquée à au moins un dispositif d'émission et de réception électromagnétique, la couche de liaison étant disposée à partir de l'au moins un dispositif d'émission et de réception électromagnétique dans la direction radiale entre l'au moins un dispositif d'émission et de réception électromagnétique et la bande de frettes bobinées.

11. Pneumatique (1) selon l'une des revendications précédentes, **caractérisé en ce que** l'au moins un dispositif d'émission et de réception électromagnétique (14) est au moins partiellement revêtu d'une couche de protection (31), la couche de protection (31) contenant un film de matière synthétique ou un film métallique.

12. Pneumatique (1) selon l'une des revendications précédentes, **caractérisé en ce que** le pneumatique (1) est un pneumatique vulcanisé.
